(19) Europäisches Patentamt
European Patent Office
Office européen des brevets

(11) **EP 2 617 696 A1**

(12) **EUROPEAN PATENT APPLICATION**
published in accordance with Art. 153(4) EPC

(43) Date of publication:
**24.07.2013 Bulletin 2013/30**

(21) Application number: **11825218.8**

(22) Date of filing: **14.09.2011**

(51) Int Cl.:
**C04B 38/00** (2006.01)    **A01G 1/00** (2006.01)
**A01G 7/00** (2006.01)    **A01G 9/10** (2006.01)
**C04B 33/13** (2006.01)    **C04B 33/132** (2006.01)

(86) International application number:
**PCT/JP2011/071034**

(87) International publication number:
**WO 2012/036218 (22.03.2012 Gazette 2012/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.09.2010 JP 2010208458**

(71) Applicant: **Komatsu Seiren Co., Ltd.
Ishikawa 929-0124 (JP)**

(72) Inventors:
• **OKUYA Teruhiro**
  **Nomi-city, Ishikawa 929-0124 (JP)**
• **ONISHI Kazuya**
  **Kanazawa-shi, Ishikawa 920-8203 (JP)**

(74) Representative: **Tischner, Oliver**
  **Lavoix
  Bayerstraße 85a
  80335 München (DE)**

(54) **POROUS CERAMIC SINTERED BODY**

(57)    The present invention provides a porous ceramic sintered body suitable for plant growth and with a high cooling effect.

The present invention relates to a porous ceramic sintered body including a pore volume, which is the total volume of pores with a diameter of 3 nm to 360 $\mu$m, of 0.2 cm³/g or larger and including a micropore volume ratio of 30% by volume or more, in which the micropore volume ratio equals to the total volume of pores with a diameter equal to or greater than 0.01 $\mu$m and less than 1 $\mu$m divided by the pore volume.

FIG. 4

**Description**

Technical Field

The present invention relates to a porous ceramic sintered body.
Priority is claimed on Japanese Patent Application No. 2010-208458, filed September 16, 2010, the content of which is incorporated herein by reference.

Background Art

Generally, a porous ceramic sintered body is used for an insulating refractory material, a water purification material, a humidity conditioning material, a volatile organic compound (VOC) adsorption material or the like. As a structure of this porous ceramic sintered body, a closed-cell foam type structure, a lattice type structure, an aggregate type structure, a structure with minute cracked pores, a structure with consecutive through holes, and the like are exemplary examples and the structure is selected depending on the use.
A porous ceramic sintered body having a lattice type structure in which ceramic compositions are injected into air holes of urethane foam resin to fill the same and then resin components are decomposed and the resultant is sintered has been known.
A porous ceramic sintered body having an aggregate type structure in which voids of aggregate of elementary particles in a composition are used as air holes has been known.
A porous ceramic sintered body having a closed-cell foam type structure in which air holes are generated by high temperature decomposing volatile components in a composition in a calcination step has been known.
A porous ceramic sintered body having a structure with minute cracked pores which is obtained by sintering a composition in which a clayey raw material that is contracted when heated and slags that are expanded when heated are mixed has been known.
In addition, a porous ceramic sintered body having a structure with consecutive through holes which is obtained by adding an alkali solution to metallic aluminum so as to generate hydrogen in a water-containing composition and then sintering the composition has been known.
Recently, a porous ceramic sintered body is also used for a greening base material. The greening base material is laid under soil for growing ground cover plants and needs to have an easy water infiltration and a proper water retentivity. This greening base material is laid on the roof of buildings or the like and plants are grown thereon. According to this, the cooling effect of buildings may be improved.
A porous ceramic sintered body used for a greening base material is proposed in which diatomaceous earth is used as a raw material and a molding body of diatomaceous earth is sintered (for example, PTL 1). Since the porous ceramic sintered body has a binary structure in which micro air holes derived from diatomaceous earth are connected with millimeter-sized tunnel structure voids formed artificially, the porous ceramic sintered body has easy water infiltration and good water retentivity.

Citation List

Patent Literature

[PTL 1] Japanese Unexamined Patent Application, First Publication No. 2005-239467

Summary of Invention

Technical Problem

However, in addition to easy water infiltration and proper water retentivity, the porous ceramic sintered body used for a greening base material is desired to have good water diffusivity (diffusivity), particularly, to have diffusivity in a horizontal direction. Further, water, which is retained in air holes of the porous ceramic sintered body, has to be used in plants to be grown. Furthermore, in the porous ceramic sintered body, the further improvement of the cooling effect is desired.
To address the above-described circumstances, an object of the present invention is to provide a porous ceramic sintered body which is suitable for plant growth and which has a high cooling effect.

Solution to Problem

A porous ceramic sintered body according to the present invention includes a pore volume, which is the total volume of pores with a diameter of 3 nm to 360 $\mu$m, of 0.2 cm$^3$/g or larger and includes a micropore volume ratio of 30% by volume or more, in which the micropore volume ratio equals to the total volume of pores with a diameter equal to or greater than 0.01 $\mu$m and less than 1 $\mu$m divided by the pore volume.

It is preferable that a median pore diameter of pores with a diameter of 3 nm to 360 $\mu$m be smaller than 40 $\mu$m. It is preferable that the porous ceramic sintered body preferably include a layer-like dense layer having a bulk specific gravity of 0.7 g/cm$^3$ or more and a non-dense layer having a bulk specific gravity of less than 0.7 g/cm$^3$. It is more preferable that the non-dense layer be provided on both surfaces of the dense layer. The porous ceramic sintered body may be used as a greening base material.

Advantageous Effects of Invention

An object of the present invention is to provide a porous ceramic sintered body which is suitable for plant growth and which has a high cooling effect.

Brief Description of Drawings

FIG. 1 is a cross-sectional photograph of a porous ceramic sintered body according to an embodiment of the present invention.
FIG. 2(a) is an electron microscopic photograph (magnification 30) of the cross section of a dense layer of the porous ceramic sintered body shown in FIG. 1. FIG. 2(b) is an electron microscopic photograph (magnification 2,000) in which a portion of the cross section of FIG. 2(a) is zoomed.
FIG. 3 is a cross-sectional photograph of a porous ceramic sintered body of Comparative Example.
FIG. 4 is a chart showing a measurement result of the pore volume of a dense layer of a porous ceramic sintered body of Example.
FIG. 5 is a chart showing a measurement result of the pore volume of a first non-dense layer of the porous ceramic sintered body of Example.
FIG. 6 is a chart showing a measurement result of the pore volume of the porous ceramic sintered body of Comparative Example.
FIG. 7 is a schematic diagram illustrating a test method of diffusivity (horizontal direction).
FIG. 8A is a schematic diagram illustrating a test method of diffusivity (15° inclination).
FIG. 8B is a schematic diagram illustrating a test method of diffusivity (15° inclination).
FIG. 9 is a graph showing a result of a plant growth test.
FIG. 10A is a graph showing a measurement result of an evaporation rate.
FIG. 10B is a graph showing a measurement result of an evaporation rate.

Description of Embodiments

(Porous Ceramic Sintered Body)

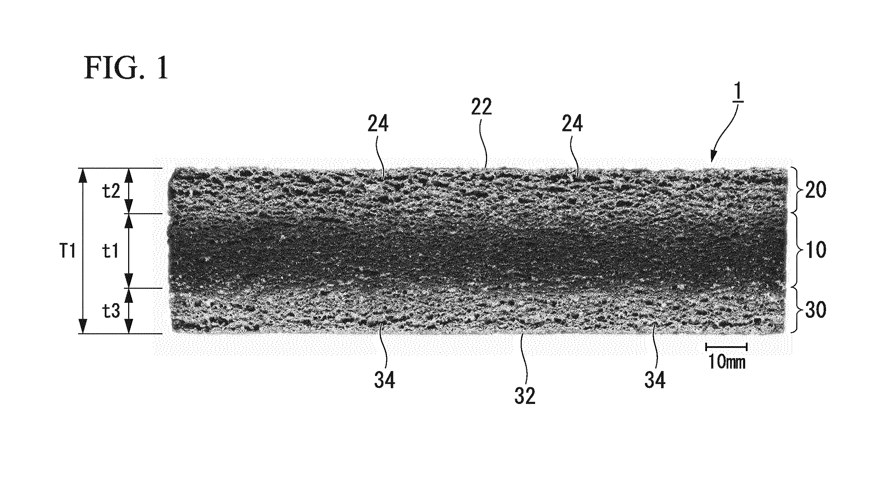

Hereinafter, a plate-like porous ceramic sintered body (hereinafter, referred to as a plate-like ceramic body in some cases) according to an embodiment of the present invention will be described referring to the drawing. FIG. 1 is a cross-sectional view of a plate-like ceramic body 1 according to the embodiment of the present invention.

As shown in FIG. 1, the plate-like ceramic body 1 is schematically configured to include a dense layer 10, a first non-dense layer 20 provided on one surface of the dense layer 10, and a second non-dense layer 30 provided on the other surface of the dense layer 10. That is, the plate-like ceramic body 1 has a three-layer structure consisting of the dense layer 10, the first non-dense layer 20, and the second non-dense layer 30.

An opening in which an air hole formed on the first non-dense layer 20 is exposed is formed on a first surface 22 that is the surface of the first non-dense layer 20. An opening in which an air hole formed on the second non-dense layer 30 is exposed is formed on a second surface 32 that is the surface of the second non-dense layer 30.

A thickness T1 of the plate-like ceramic body 1 may be determined depending on uses. For example, the thickness T1 may be determined in a range of 0.5 to 15 cm and preferably in a range of 1.5 to 10 cm.

<Dense Layer>

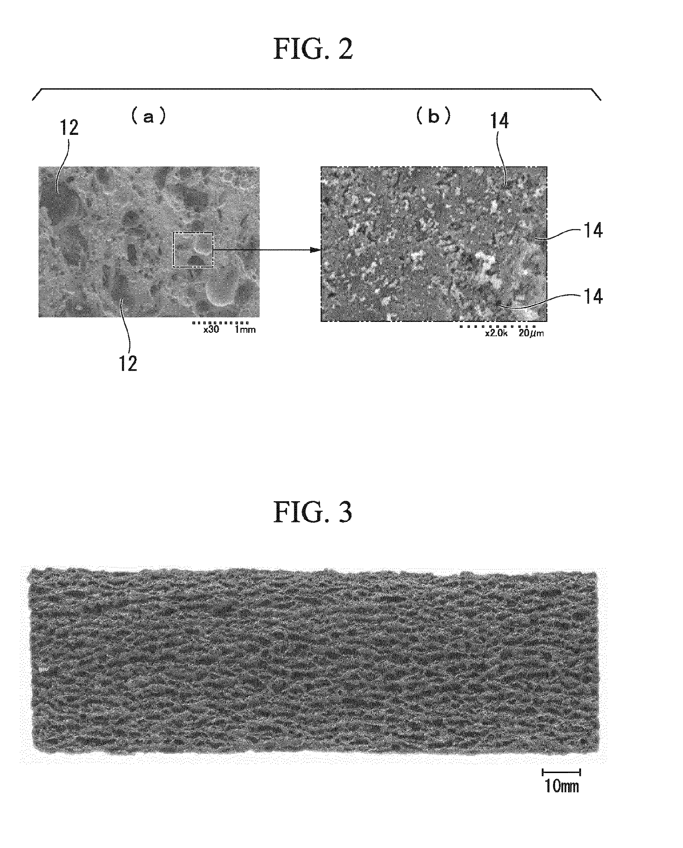

The dense layer 10 is a layer in which pores with a diameter of 3 nm to 360 $\mu$m (hereinafter, simply referred to as pores in some cases) are formed.
In the dense layer 10, as shown in FIG. 2(a), two or more voids 12, which are air holes with a diameter of larger than 360 $\mu$m, are formed and, as shown in FIG. 2(b), two or more pores 14 are formed.
The pores 14 or the voids 12 formed in the dense layer 10 form communication holes which communicate with each other. By forming the communication holes, the water retentivity, the diffusivity, and the cooling effect are improved.
The pore volume of the dense layer 10, that is, the total value of the volume of all pores 14, is 0.2 cm$^3$/g or larger, preferably 0.25 cm$^3$/g or larger, and more preferably 0.3 cm$^3$/g or larger. When the pore volume thereof is smaller than the lower limit described above, the diffusivity in the plate-like ceramic body 1 is insufficient or the water retentivity therein is insufficient. In addition, the upper limit of the pore volume may be determined depending on uses of the plate-like ceramic body 1 and, for example, the upper limit thereof is preferably 0.8 cm$^3$/g or smaller, more preferably 0.6 cm$^3$/g or smaller, and still more preferably 0.4 cm$^3$/g or smaller. When the pore volume exceeds the upper limit described above, water is difficult to evaporate and thus the cooling effect may be deteriorated.
The pore volume is a value measured based on JIS R1655-2003.
The total value of volume of the pores 14 in the dense layer 10 per unit volume (the volume of pores per unit volume) may be determined in consideration of uses or the like of the plate-like ceramic body 1 and, for example, the total value thereof is preferably 0.1 to 0.5 cm$^3$/cm$^3$, and more preferably 0.2 to 0.4 cm$^3$/cm$^3$. When the total value thereof is smaller than the lower limit described above, the water retentivity and the diffusivity may be insufficient. When the total value thereof exceeds the upper limit described above, the strength of the plate-like ceramic body 1 may be insufficient.
The ratio of the micropore volume to the pore volume (micropore ratio) which is the total value of volume of pores with a diameter of equal to or greater than 0.01 $\mu$m and smaller than 1 $\mu$m (hereinafter, referred to as micropores in some cases) in the pores 14, is 30% by volume or more of the pore volume, more preferably 40% by volume or more, and still more preferably 50% by volume or more. When the ratio thereof is less than the lower limit described above, the water retentivity and the diffusivity are insufficient. The upper limit of the micropore ratio is not particularly limited but may be 100% by volume. The micropore ratio is obtained by using the following formula (1).
$$\text{Micropore ratio (\% by volume)} = \text{micropore volume} \div \text{pore volume} \times 100 \ \ldots(1)$$

The micropore volume of the dense layer 10 may be determined in consideration of uses or the like of the plate-like ceramic body 1 as long as the micropore ratio is 30% by volume or more. For example, when the plate-like ceramic body 1 is used for the greening base material, the micropore volume thereof is preferably 0.1 cm$^3$/g or larger, more preferably 0.12 cm$^3$/g or larger, still more preferably 0.14 cm$^3$/g or larger, and particularly preferably 0.2 cm$^3$/g or larger. When the micropore volume thereof is smaller than the lower limit described above, the diffusivity in the plate-like ceramic body 1 may be insufficient or the water retentivity therein may be insufficient. In addition, the upper limit of the micropore volume in the dense layer 10 may be determined in consideration of uses or the like of the plate-like ceramic body 1. For example, when the upper limit thereof is preferably 0.8 cm$^3$/g or less, more preferably 0.6 cm$^3$/g or less, and still more preferably 0.4 cm$^3$/g or less. When the micropore volume exceeds the upper limit described above, water is difficult to evaporate and thus the cooling effect may be deteriorated.
The micropore volume is a value measured by the same method as the pore volume.
When the volume of the voids 12 of the dense layer 10 is too small, a thermal insulating property may be deteriorated. When the volume thereof is too large, the water retentivity may be deteriorated. Therefore, the volume of the voids 12 may be determined in consideration of uses or the like of the plate-like ceramic body 1.
The median pore diameters of pores with a diameter of 3 nm to 360 $\mu$m may be smaller than 40 $\mu$m. The median pore diameters thereof may be preferably 30 $\mu$m or smaller, more preferably 20 $\mu$m or smaller, and still more preferably 10 $\mu$m or smaller. In addition, the median pore diameters of pores with a diameter of 3 nm to 360 $\mu$m may be 10 nm or larger. The median pore diameters thereof may be preferably 100 nm or larger.
When the median pore diameter is smaller than 40 $\mu$m, the water retentivity is excellent and thus it is possible to continuously evaporate water from the ceramic sintered body for a long time.
Moreover, when the median pore diameter is smaller than 10 nm, the water retentivity is deteriorated and thus it may be difficult to continuously evaporate a sufficient amount of water from the ceramic sintered body for a long time.
The bulk specific gravity of the dense layer 10 is 0.7 g/cm$^3$ or more, preferably 0.75 to 0.95 g/cm$^3$, and more preferably 0.8 to 0.9 g/cm$^3$. When the bulk specific gravity thereof is less than the lower limit described above, the strength of the plate-like ceramic body 1 may be insufficient, the water retentivity may be deteriorated, or the diffusivity may be deteriorated. When the bulk specific gravity thereof exceeds the upper limit described above, water may be difficult to evaporate and thus the cooling effect may be deteriorated or water may be difficult to infiltrate.

The porosity of the dense layer 10 may be determined in consideration of uses or the like of the plate-like ceramic body 1. For example, the porosity thereof is preferably 40% by volume or more, is more preferably 60 to 90% by volume, is even more preferably 65 to 80% by volume, and is still more preferably 70 to 80% by volume. When the porosity thereof is less than the lower limit described above, the speed of the water diffusivity in the plate-like ceramic body 1 may be deteriorated. When the porosity thereof exceeds the upper limit described above, the water retentivity may be deteriorated or the strength of the plate-like ceramic body 1 may be deteriorated.

A thickness t1 of the dense layer 10 may be determined in consideration of uses, the thickness T1 of the plate-like ceramic body 1 or the like, and, for example, the thickness t1 thereof is determined preferably to be in a range of 20 to 60% of the thickness T1.

<First Non-dense Layer>

The first non-dense layer 20 is a layer in which pores are formed. As shown in FIG. 1, in the first non-dense layer 20, two or more voids 24 and two or more pores which are not shown in the drawing are formed, and a communication hole in which the void 24 and the pore communicate with each other is formed.

The pore volume of the first non-dense layer 20 is 0.2 $cm^3$/g or larger, preferably 0.3 to 0.6 $cm^3$/g, and more preferably larger than 0.4 $cm^3$/g and 0.5 $cm^3$/g or smaller. When the pore volume thereof is smaller than the lower limit described above, the diffusivity in the plate-like ceramic body 1 is insufficient or the water retentivity therein is insufficient. When the pore volume exceeds the upper limit described above, water is difficult to evaporate and thus the cooling effect may be deteriorated.

The volume of pores per unit volume to the first non-dense layer 20 is the same as the volume of pores per unit volume to the dense layer 10.

In the embodiment, the volume of pores per unit volume in the first non-dense layer 20 is considered to be smaller than the volume of pores per unit volume in the dense layer 10. By setting the volume of pores per unit volume in the first non-dense layer 20 to be smaller than that of the dense layer 10, the water retentivity and the diffusivity are improved while maintaining a sufficient strength of the plate-like ceramic body 1.

The micropore ratio of the first non-dense layer 20 is the same as the micropore ratio of the dense layer 10. The micropore volume of the first non-dense layer 20 may be determined in consideration of uses or the like and, for example, the micropore volume thereof is preferably 0.1 $cm^3$/g or larger, more preferably 0.12 to 0.8 $cm^3$/g, and still more preferably 0.14 to 0.4 $cm^3$/g. When the micropore volume thereof is smaller than the lower limit described above, the diffusivity may be deteriorated. When the micropore volume thereof exceeds the upper limit described above, water is difficult to evaporate and thus the cooling effect may be deteriorated.

When the volume of the voids 24 of the first non-dense layer 20 is too small, the thermal insulating property may be deteriorated or water is difficult to infiltrate. In addition, when the volume of the voids 24 is too large, the strength of the plate-like ceramic body 1 may be deteriorated. Therefore, the volume of the voids 24 may be determined in consideration of uses or the like of the plate-like ceramic body 1.

The median pore diameters of pores with a diameter of 3 nm to 360 $\mu$m may be smaller than 40 $\mu$m. The median pore diameter thereof may preferably be 30 $\mu$m or smaller, more preferably be 20 $\mu$m or smaller, and still more preferably be 10 $\mu$m or smaller. In addition, the median pore diameters of pores with a diameter of 3 nm to 360$\mu$ m may be 10 nm or larger. The median pore diameters thereof may be preferably 100 nm or larger.

When the median pore diameters thereof are smaller than 40 $\mu$m, the water retentivity is excellent and thus it is possible to continuously evaporate water from the ceramic sintered body for a long time.

Moreover, when the median pore diameters thereof are smaller than 10 nm, the water retentivity is deteriorated and thus it may be difficult to continuously evaporate a sufficient amount of water from the ceramic sintered body for a long time.

The bulk specific gravity of the first non-dense layer 20 is less than 0.7 g/$cm^3$, preferably 0.4 g/$cm^3$ or more and less than 0.7 g/$cm^3$, and more preferably 0.5 to 0.65 g/$cm^3$. When the bulk specific gravity thereof exceeds the upper limit described above, water permeability may be deteriorated or water may be difficult to evaporate and thus it may be difficult to obtain a good cooling effect. In addition, when the bulk specific gravity thereof is less than the upper limit described above, the thermal insulating property or the sound insulating property of the plate-like ceramic body 1 is improved. When the bulk specific gravity thereof is less than the lower limit described above, the strength of the plate-like ceramic body 1 may be deteriorated or the evaporation of water is too fast and thus it may be difficult to maintain the cooling effect.

The porosity of the first non-dense layer 20 may be determined in consideration of uses or the like of the plate-like ceramic body 1. For example, the porosity thereof is preferably 50% by volume or more, preferably 60 to 90% by volume, and more preferably more than 80% by volume and 90% by volume or less. When the porosity thereof is less than the lower limit described above, it may be difficult for water to infiltrate therein. When the porosity thereof exceeds the upper limit described above, the strength of the plate-like ceramic body 1 may deteriorate.

In the embodiment, the porosity of the first non-dense layer 20 is considered to be larger than that of the porosity of the dense layer 10. When the porosity of the first non-dense layer 20 is considered to be larger than that of the porosity of the dense layer 10, the thermal insulating property or the sound insulating property of the plate-like ceramic body 1 is further improved.

A thickness t2 of the first non-dense layer 20 may be determined in consideration of uses, the thickness T1 of the plate-like ceramic body 1 or the like, and, for example, the thickness t2 thereof is determined to preferably be in a range of 20 to 40% of the thickness T1.

<Second Non-dense Layer>

The second non-dense layer 30 is a layer in which pores are formed. As shown in FIG. 1, in the second non-dense layer 30, two or more voids 34 and two or more pores which are not shown in the drawing are formed and a communication hole in which the void 34 and the pore communicate with each other is formed.

The pore volume of the second non-dense layer 30 is the same as the pore volume of the first non-dense layer 20 and the volume of pores per unit volume in the second non-dense layer 30 is the same as that of the first non-dense layer 20.

The micropore volume of the second non-dense layer 30 is the same as the micropore volume of the first non-dense layer 20 and the micropore ratio of the second non-dense layer 30 is the same as the micropore ratio of the first non-dense layer 20.

The median pore diameters of the pores with a diameter of 3 nm to 360 $\mu$m in the second non-dense layer 30 is the same as that of pores with a diameter of 3 nm to 360 $\mu$m in the first non-dense layer 20.

The bulk specific gravity of the second non-dense layer 30 is the same as the bulk specific gravity of the first non-dense layer 20 and the porosity of the second non-dense layer 30 is the same as the porosity of the first non-dense layer 20.

The thickness t3 of the second non-dense layer 30 is the same as the thickness t2 of the first non-dense layer 20.

(Manufacturing Method)

A manufacturing method of the plate-like ceramic body 1 includes a mixing step of mixing raw materials to obtain a mixture, a molding step of molding the mixture to obtain a molding body, and a calcination step of calcining the molding body.

<Mixing Step>

The mixing step is a step in which diatomaceous earth, clays, organic sludge, and slag are mixed to obtain a mixture. By blending as described above, a plate-like ceramic body having pores formed in the diatomaceous earth and pores, which are formed in such a manner that the weight of the organic sludge is decreased during sintering, is obtained.

<<Diatomaceous Earth>>

The diatomaceous earth used in the present invention is a deposit consisting of the remains of diatoms and is a porous material having micrometer-order air holes.

The diatomaceous earth is not particularly limited but the same material as a material that is traditionally used for an insulating refractory brick, a filtration material and the like may be used. For example, it is not necessary to fractionally purify an adulterated material of clay minerals (such as montmorillonite), quartz, feldspar and the like and, with recognition of the amount thereof, it is possible to adjust the blending quantity thereof to the mixture.

The moisture content of the diatomaceous earth is not particularly limited but, for example, the moisture content of the diatomaceous earth in a natural drying state is preferably 20 to 60% by mass, more preferably 30 to 50% by mass, and still more preferably 35 to 45% by mass. The reason is that, when the moisture content thereof is within the above-described range, by using the diatomaceous earth after coarse particles in the adulterated material are removed during mixing in consideration of the moisture content, it is possible to obtain a mixture with a good moldability.

The moisture content is a value obtained in such a manner that a sample is dried (200°C, for 12 minutes) using an infrared moisture gauge having a specification described below, and is calculated by the following formula (2) in a loss on drying method.

<Specification>

Measuring method: loss on drying method (drying by heating and mass measurement method)
Minimum readability: moisture content; 0.1% by mass
Measurement range: moisture content; 0.0 to 100% by mass
Drying temperature: 0 to 200°C
Measurement accuracy: 5 g or more of sample mass and moisture content of ±0.1% by mass
Thermal source: infrared lamp; 185 W

$$\text{Moisture content (\% by mass)} = [(m_1\text{-}m_2)/(m_1\text{-}m_0)] \times 100 \ ...(2)$$

$m_1$: total mass (g) being summation of the mass of a container before drying and the mass of a sample before drying
$m_2$: total mass (g) of mass of the container after drying and mass of the sample after drying
$m_0$: mass (g) of the container after drying

The blending quantity of the diatomaceous earth in the mixture may be determined in consideration of the pore volume, the micropore volume and the like of the dense layer 10, the first non-dense layer 20 or the second non-dense layer 30. For example, the blending quantity thereof is preferably 55% by mass or less, and is more preferably 1 to 45% by mass. When the blending quantity thereof is within the above-described range, it is possible to control the pore volume and the micropore ratio of the dense layer 10, the first non-dense layer 20 and the second non-dense layer 30 to be suitable without imparting the moldability of the mixture.

<<Clays>>

Clays used in the present invention are a mineral material having clayey properties which are generally used as a raw material of the ceramics industry and are a material other than the diatomaceous earth. Well-known clays, which are used for a ceramic sintered body, may be used and it is preferable that clays be configured to have a mineral composition of quartz, feldspar, clayey materials or the like, have kaolinite as a main constituent mineral, and contain halloysite, montmorillonite, or illite. Among these, from the viewpoint of suppressing the crack progress during sintering and preventing the breaking of the plate-like ceramic body 1, it is more preferable that clays contain coarse particles of quartz with a particle diameter of 500 $\mu$m or larger. The particle diameters of the coarse particles of quartz are preferably 5 mm or smaller. As the above-described clays, for example, gairome clay or the like is exemplified. One kind of clays may be used alone, or two or more kinds of clays may be used in combination.
The blending quantity of the clays in the mixture may be determined in consideration of uses or moldability of the plate-like ceramic body 1. For example, the blending quantity thereof is preferably 5 to 60% by mass, is preferably 5 to 45% by mass, and is more preferably 10 to 40% by mass.
When the blending quantity thereof is within the above-described range, it is possible to smoothly perform molding without imparting the moldability of the mixture and to make the strength of the plate-like ceramic body 1 sufficient.

<<Organic Sludge>>

The organic sludge is sludge containing organic matter as a main component. Arbitrary organic sludge may be used, and activated sludge derived from sewerage or an effluent treatment of factories or the like is particularly preferable. The activated sludge is discharged from effluent treatment facilities using an activated sludge method through aggregation and dehydration processes. By using the organic sludge as described above, it is possible to form pores or micropores. Moreover, the activated sludge derived from an effluent treatment which is considered as waste materials may be recycled as a raw material.
The moisture content of the organic sludge is, for example, preferably 60 to 90% by mass and is more preferably 65 to 85% by mass. The reason is that, when the moisture content thereof is within the above-described range, it is possible to obtain a homogenous mixture in the mixing step described later and to maintain good moldability in the molding step.
The content of the organic matter in the organic sludge is not particularly limited but, for example, the amount of organic matter (organic matter content) in the solid content of the organic sludge is preferably 70% by mass or greater, and is more preferably 80% by mass or greater. The upper limit of the organic matter content may be 100% by mass. The reason is that, as the organic matter content becomes greater, the pores are easily formed. The organic matter content is a value obtained in such a manner that the ash content (% by mass) of the sludge after drying is measured at the carbonization temperature of 700°C based on JIS M8812-1993 and is calculated by the following formula (3).

$$\text{Organic matter content (\% by mass)} = 100 \text{ (\% by mass)} - \text{ash content (\% by mass)} \ ...(3)$$

The average particle diameter of the organic sludge may be determined depending on the uses of the plate-like ceramic body 1. The average particle diameter thereof is preferably 1 to 5 $\mu$m and is more preferably 1 to 3 $\mu$m. As the average particle diameter thereof becomes smaller, the pores in the dense layer 10 are easily formed. The average particle diameter is a median diameter on a volumetric basis (diameter of 50% by volume) measured by a particle size distribution analyzer (LA-920, manufactured by Horiba Ltd.).

The amount of organic sludge to be used in the mixture may be determined in consideration of uses or moldability of the plate-like ceramic body 1. For example, the blending quantity thereof is preferably 1 to 50% by mass, is more preferably 5 to 30% by mass, and is still more preferably 5 to 20% by mass. The reason is that, when the blending quantity thereof is within the above-described range, the mixture obtains a moderate flow property and plastic property such that the moldability is improved and it is possible to smoothly perform molding without blocking a molding apparatus. Moreover, it is possible to make the pore volume and the micropore ratio of the dense layer 10, the first non-dense layer 20 or the second non-dense layer 30 preferable.

<<Slag>>

The slag is not particularly limited but examples of the slag include blast furnace slag generated when refining metal, urban waste molten slag generated when melting urban waste, sewage sludge molten slag generated when melting sewage sludge, and glass slag such as casting iron slag generated when casting ductile cast iron or the like. Among these, the casting iron slag is more preferable in which a stable foaming state is obtained because of the stable composition thereof and the foaming rate thereof is 1.5 to 2 times compared to other slag. By blending the slag, the voids 12, 24, and 34 are formed and thus the degradation in the coefficient of water permeability (speed at which water is allowed to pass) may be suppressed.

The amount of slag to be used in the mixture may be determined in consideration of uses or moldability of the plate-like ceramic body 1. For example, the blending quantity thereof is preferably 80% by mass or less, is more preferably 30 to 70% by mass, and is still more preferably 40 to 60% by mass. When the blending quantity thereof is within the above-described range, it is possible to smoothly perform molding without imparting the moldability of the mixture and to set the porosity or the bulk specific gravity of the plate-like ceramic body 1 to be in a preferable range.

<<Arbitrary Component>>

In the mixture, arbitrary components may be blended within a range not impairing the object of the present invention. Examples of the arbitrary components include a naphthalene-based plasticizer such as Mighty 2000WH (trade name, manufactured by Kao Corporation); a melamine-based plasticizer such as Melment F-10 (trade name, manufactured by Showa Denko K. K.); a polycarboxylic acid-based plasticizer such as Darex Super 100pH (trade name, manufactured by Grace Chemicals K.K.); an antimicrobial agent such as silver, copper, and zinc; an adsorption agent such as zeolite and apatite; and metallic aluminum.

When the arbitrary components are blended into the mixture, it is preferable that the amount of arbitrary components be determined in a range of 5 to 10% by mass, for example.

Moreover, when the organic sludge is blended at a preferable blending ratio in the mixing step, water may not be added in the mixing step because water is contained in the organic sludge, or water may be appropriately blended in order to adjust the flow property or the like of the mixture.

The moisture content of the mixture is not particularly limited but, for example, the moisture content thereof is preferably 25 to 45% by mass and more preferably 25 to 30% by mass. The reason is that, when the moisture content is within the above-described range, the mixture has moderate flow properties and plastic properties, and thus it is possible to maintain a good moldability.

The mixing order of each component in the mixing step is not particularly limited and, for example, a method in which the diatomaceous earth, the clays, the organic sludge, and the slag are put into a mixing apparatus at once and mixed (one-step mixing method) is an exemplary example. In addition, for example, a mixture may be obtained in such a manner that a primary mixture is obtained by mixing the diatomaceous earth and the organic sludge (first mixing operation) and then the mixture is obtained by mixing the primary mixture, the clays, and the slag (second mixing operation) (hereinbefore, two-step mixing method). Since the organic sludge has a high flow property compared to the clays, it is assumed that the organic sludge preferentially goes into air holes of the diatomaceous earth during mixing. By molding and calcining this mixture, it is considered that the organic matter of the organic sludge with which the air holes of the diatomaceous earth are filled is volatilized and the air holes of the diatomaceous earth are maintained in proportion as the air holes of the diatomaceous earth are filled with the organic sludge.

In the second mixing operation, the diatomaceous earth may be further added.

It is preferable that the mixing step include the first mixing operation and the second mixing operation. First, in the first mixing operation, by mixing the diatomaceous earth and the organic sludge, a primary mixture with a moderate flow property is obtained and the air holes of the diatomaceous earth are filled with the organic sludge. Subsequently, in the second mixing operation, by mixing the primary mixture with moderate flow properties, the clays, and slag, a homogenous mixture is stably obtained. Since the air holes of the diatomaceous earth are already filled with the organic sludge in the second mixing operation, the clays do not easily go into the air holes of the diatomaceous earth. Therefore, the mixture obtained by the two-step mixing method has a higher ratio of the air holes of the diatomaceous earth which are filled with the organic sludge, compared to the mixture obtained by the one-step mixing method. As a result, by using the two-step mixing method as the mixing step, it is considered that more air holes of the diatomaceous earth are maintained without being blocked.

The mixing apparatus used in the mixing step is not particularly limited but a well-known mixing apparatus may be used.

For example, examples of the mixing apparatus include a kneading machine such as Mix Muller (manufactured by Toshin Industry Co., Ltd.); a kneader (manufactured by MORIYAMA COMPANY LTD.); and a mixing machine (manufactured by NITTO KAGAKU Co., Ltd.).

The mixing time in the mixing step may be determined in consideration of the blending ratio of the diatomaceous earth, the clays, the organic sludge and the slag, or the flow properties or the like of the mixture. It is preferable that the mixing time be determined such that the mixture is in a plastic state. For example, the mixing time is preferably in a range of 15 to 45 minutes and more preferably in a range of 25 to 35 minutes.

The temperature in the mixing step is not particularly limited but the temperature may be determined in consideration of the blending ratio of the diatomaceous earth, the clays, the organic sludge and the slag; the moisture content; or the like. For example, the temperature is preferably in a range of 40 to 80°C and is more preferably in a range of 50 to 60°C.

<Molding Step>

The molding step is a step in which the mixture obtained in the mixing step is molded in an arbitrary shape.

A well-known molding method may be used for a molding method and the molding method may be determined in consideration of characteristics of the mixture or a shape of the porous ceramic sintered body. Examples of the molding method include a method of obtaining an arbitrary plate-like molding body using a molding machine; a method of obtaining a molding body by filling a mixture into an arbitrary shape mold; or a method in which a mixture is stretched or rolled and then the mixture is cut into an arbitrary size.

Examples of the molding machine include a vacuum earth kneading and molding machine; a flat plate press molding machine; and a flat plate extruding and molding machine. Among these, vacuum earth kneading and molding machine is preferable. By removing air in a molding body using vacuum earth kneading and molding machine, it is possible to control the micropore ratio of the dense layer 10.

<Calcination Step>

The calcination step is a step in which the molding body obtained in the molding step is dried (drying operation), the dried molding body is calcined (calcination operation), and the diatomaceous earth, the clays and the like are sintered, thereby obtaining a porous ceramic sintered body.

<<Drying Operation>>

The drying operation is not particularly limited but a well-known method may be used. For example, a molding body may be naturally dried or may be dried under heat at 50 to 220°C in a hot air drying furnace for an arbitrary time. The moisture content of the dried molding body is not particularly limited but, for example, the moisture content thereof is preferably less than 5% by mass and is more preferably less than 1% by mass. The moisture content of the dried molding body may be 0% by mass as a lower limit.

<<Calcination Operation>>

A calcination method is not particularly limited but a well-known method may be used. For example, a method in which calcination is performed at an arbitrary temperature using a continuous sintering furnace such as a roller hearth kiln or a batch-wise sintering furnace such as a shuttle kiln is an exemplary example of a calcination method. Among these, from the viewpoint of productivity, a continuous sintering furnace is preferably used in calcining.

The calcination temperature (reaching temperature) may satisfy a condition in which the diatomaceous earth and the clays are sintered, organic matter contained in the organic sludge is volatized by thermal decomposition so as to lose weight thereof, and the slag is expanded. The calcination temperature may be determined in consideration of the blending ratio of the diatomaceous earth, the clays, the organic sludge and the slag, or in consideration of the components or the like of the organic sludge. For example, the calcination temperature is preferably 950 to 1,200°C and is more preferably 1,000 to 1,100°C. Most of the organic matter is started to be decomposed at around 700°C, a unique smell of the organic sludge is thermally decomposed at 950°C so as to solve the smell problem, and most of the organic matter in the organic sludge is volatilized so as to reduce the weight thereof. Moreover, most of the slag is expanded by crystallization at 800 to 850°C.

When the calcination temperature exceeds 1,200°C, the entire compositions of the porous ceramic sintered body are vitrified and thus the molding body may be broken or pores or voids may be blocked.

In the calcination step, until the temperature reaches the calcination temperature, moisture is firstly evaporated from the molding body and thereafter organic matter of the activated sludge is volatilized through thermal decomposition. In this process, by appropriately adjusting the temperature increase (heat curve and temperature gradient), it is possible to suppress a drastic evaporation of moisture or a drastic volatilization of organic matter, and thus pulverization (blasting) of the molding body may be prevented. In addition, there is a case where damage such as breaking or pulverization occurs in the porous ceramic sintered body due to a drastic cooling after a temperature is reached at the calcination temperature. This phenomenon is most prevalent when using a continuous sintering furnace. Therefore, in the calcination step, it is preferable that a temperature gradient be provided.

The temperature gradient may be determined in consideration of the size or the like of a calcination apparatus. For example, when calcination is performed using a continuous sintering furnace having a calcining portion with an effective length of 15 m, it is preferable that the temperature of an inlet port and of an outlet port of the continuous sintering furnace be set to a normal temperature (20°C ± 15°C), that the calcination temperature of a central portion of the continuous sintering furnace be set at 950°C to 1,200°C, that the transit speed of the molding body in the continuous sintering furnace be set at 3 to 4 mm/sec., and the temperature gradient condition be set as follows.

The continuous sintering furnace is divided into 10 zones with an equal distance and the temperature gradient of the continuous sintering furnace is preferably 0.4 to 0.6°C/sec., 0.1 to 0.2°C/sec., 0.3 to 0.4°C/sec., 0.4 to 0.6°C/sec., 0.7 to 1.0°C/sec., 0.004 to 0.005°C/sec., -0.4 to -0.2°C/sec., -0.8 to -0.5°C/sec., -0.4 to -0.3°C/sec., and -0.3 to -0.1°C/sec., from the inlet port side.

If the moisture content of the molding body exceeds 3% by mass when the molding body is put into the continuous sintering furnace, the moisture content in the calcination step is drastically evaporated and thus bursting or blasting may occur in the molding body or the activated sludge is drastically volatilized and thus a damage may occur. Therefore, for example, by controlling the temperature gradient in the continuous sintering furnace as described above, it is possible to suppress damage of the molding body in the calcination step. Moreover, by providing an appropriate temperature gradient, a three-layer structure is formed or a communication hole is formed and thus it is possible to enhance the water retentivity, the diffusivity, the water permeability or the cooling effect of the plate-like ceramic body 1.

The calcination time may be determined in consideration of the calcination temperature, the moisture content of the mixture or the like. For example, a residence time at the calcination temperature is preferably in a range of 4 to 10 minutes and more preferable in a range of 6.5 to 7.5 minutes. When the residence time is within the above-described range, it is possible to preferably perform calcination while preventing damage of the plate-like ceramic body 1.

The plate-like ceramic body 1 obtained as described above may be used without change or about 5 cm from the side end of the plate-like ceramic body 1 may be cut off along four side surfaces so as to be used for a greening base material or the like. When the plate-like ceramic bodies 1 are arranged next to each other and then used, it is preferable that 5 cm from the side end of the plate-like ceramic body 1 be cut off along the four side surfaces, from the viewpoint of a good contact state of the side surfaces to each other.

The front surface of the plate-like ceramic body 1 may be ground using a grinder or the like. By grinding the front surface of the plate-like ceramic body 1, the speed of water absorption is improved. Moreover, when the plate-like ceramic body 1 is used for a greening base material or the like, by grinding the front surface of the plate-like ceramic body 1, a root of a plant is easy to get into the plate-like ceramic body 1. Therefore, the firing of plants is prevented and the growth of plants is promoted.

Since the pore volume is 0.2 cm$^3$/g or larger and the micropore ratio is 30% by volume or more, the plate-like ceramic body according to the embodiment has high water retentivity and diffusivity. The reason is that water is immediately absorbed and retained by the capillary action of communication holes. In addition, water infiltrating into the plate-like ceramic body is gradually evaporated and thus it is possible to maintain the cooling effect for a long time.

As described above, since the plate-like ceramic body according to the embodiment has excellent water retentivity and diffusivity, the plate-like ceramic body according to the embodiment is suitable for plant growth and since the retained water is evaporated over a long period of time, the plate-like ceramic body according to the embodiment has a high cooling effect.

Since the plate-like ceramic body according to the embodiment has a three-layer structure which is configured to include a dense layer with a bulk density of 0.7 g/cm$^3$ or more and non-dense layers with a bulk specific gravity of less than 0.7 g/cm$^3$ that are formed on both surfaces of the dense layer, the plate-like ceramic body according to the embodiment has excellent thermal insulating property and sound insulating property, and the water retentivity and the diffusivity thereof are improved while maintaining the water permeability. For example, when the first surface 22 is set to be the upper side in a vertical direction and then water is poured to the first surface 22, the poured water rapidly flows downward to reach to the dense layer 10, since the first non-dense layer 20 with a low bulk specific gravity has high water permeability. The water reaching to the dense layer 10 is diffused to a horizontal direction as well as the lower side in the vertical direction, by the capillary action of communication holes formed in the dense layer 10. In this way, the water poured to the first surface 22 is rapidly diffused into the plate-like ceramic body 1 and is retained in the plate-like ceramic body 1.

Since the plate-like ceramic body according to the embodiment has excellent water retentivity and diffusivity and it is possible to maintain a good cooling effect thereof for a long time, the plate-like ceramic body according to the embodiment is preferably used for a greening base material, plant cultivation equipment and a thermal insulating material both indoors and outdoors. In addition, since the plate-like ceramic body according to the embodiment can suppress temperature increases with respect to buildings or the surface of ground in which it is used, the plate-like ceramic body according to the embodiment is preferably used for a roofing material, an external wall material or an embedded material which is embedded in the surface of the ground or in the ground of a walking path or a parking area. Particularly, the plate-like ceramic body according to the embodiment is preferably used as a greening base material.

According to the manufacturing method of the embodiment, since the plate-like ceramic body is obtained by molding and calcining the molding body in a state where the air holes of the diatomaceous earth are filled with the organic sludge, organic matter of the organic sludge is volatilized during sintering and it is possible to maintain the air holes of the diatomaceous earth. In addition, pores, which are formed by volatilizing the organic matter of the organic sludge in the molding body during calcining, are formed in the plate-like ceramic body. Moreover, voids are formed in the plate-like ceramic body by expanding the slug in the molding body during calcination. As a result, it is possible to obtain a plate-like ceramic body having pores and voids.

Since the organic sludge has a high flow property compared to the clays, it is assumed that the organic sludge preferentially goes into air holes of the diatomaceous earth in the mixing step. It is considered that the organic matter of the organic sludge in the air holes of the diatomaceous earth filled with the organic sludge is volatilized during sintering and the air holes of the diatomaceous earth are maintained. In addition, by calcining the molding body containing the organic sludge, more pores are formed in the plate-like ceramic body by volatilizing the organic matter of the organic sludge and a communication hole is formed. Moreover, since the mixing step includes the first mixing operation and the second mixing operation, the entry of the clays into the air holes of the diatomaceous earth is effectively prevented and pores are easily formed.

According to the manufacturing method of the present invention, it is possible to obtain the plate-like ceramic body having a three-layer structure. The reason why the three-layer structure is formed is assumed to be as follows. In the calcination step, first, the temperature in the vicinity of the front surface of the molding body becomes an arbitrary temperature, pores and voids are formed, and the first and second non-dense layers are provided through calcination. Next, the temperature in the vicinity of the central portion of the molding body becomes an arbitrary temperature and pores and voids are formed in the vicinity of the central portion. In this time, since air holes are formed in the vicinity of the front surface and sintering is already carried out, the slag in the vicinity of the central portion is not sufficiently expanded and thus the volume of the voids is difficult to increase. Therefore, it is considered that the dense layer having a higher bulk specific gravity than that of the non-dense layers is formed between the first non-dense layer and the second non-dense layer.

According to the manufacturing method of the present invention, since the organic sludge which is considered to be a waste material from the past is utilized as a raw material, the manufacturing method of the present invention is capable of responding preferably to environmental aspects. In addition, the organic sludge is a raw material which can be easily and massively obtained and has a raw material procurement advantage. Moreover, since the moisture content of the organic sludge is high, the operation of adding water in the mixing step can be omitted.

The present invention is not limited to the above-described embodiment.
In the above-described embodiment, the porous ceramic sintered body is considered to be in a plate-like shape, but, in the present invention, it is preferable that the pore volume thereof be 0.2 cm$^3$/g or larger and the micropore ratio thereof be 30% by volume or more and the shape of the porous ceramic sintered body may be selected depending on the usage thereof. For example, the shape of the porous ceramic sintered body may be a flowerpot shape, a pellet shape, or a granular shape in which the plate-like ceramic body is pulverized to about 1 to 50 mm squares. Moreover, in advance, the porous ceramic sintered body may be sintered to be a granular shape with about 1 to 50 squares. The granular-shaped porous ceramic sintered body can be used without change or can be used as a raw material of blocks or tiles which is used for a wall material or a road surface material, and thus, by using the granular-shaped porous ceramic sintered body as described above, a material for building construction or a civil engineering material with excellent water retentivity, diffusivity, water cooling, thermal insulation and sound insulating property can be obtained.
In the above-described embodiment, the first and second non-dense layers are provided but the present invention is not limited thereto. The porous ceramic sintered body may be configured to include only a dense layer, or to include only non-dense layers or the non-dense layer may be provided on only one surface of the dense layer. The porous ceramic sintered body configured to include only a dense layer may be obtained by adjusting the blending ratio and the calcination condition of each raw material.
In the above-described embodiment, the dense layer and the non-dense layers are laminated but the present invention is not limited thereto. For example, the non-dense layer may be formed in such a manner that the non-dense layer covers the dense layer as a core.
In the above-described embodiment, the voids are formed in the dense layer but the present invention is not limited thereto. The voids may not be formed in the dense layer.
Moreover, in the above-described embodiment, the voids are formed in the non-dense layer but the present invention is not limited thereto. The voids may not be formed in the non-dense layer.
The dense layer or the non-dense layer in which the voids are not formed may be obtained by not blending slag into the molding body.
In the above-described embodiment, the diatomaceous earth is blended into the mixture but the present invention is not limited thereto. The diatomaceous earth may not be blended into the mixture. By not blending the diatomaceous earth, it is possible to reduce the pore volume derived from the diatomaceous earth.

[Example]

Hereinafter, the present invention will be described in detail referring to Examples but the present invention is not limited to the following description.

(Raw Material to Be Used)

Raw materials used in Examples were as follows.

<Organic Sludge>

Activated sludge, which is discharged from effluent treatment facilities of a dyehouse (KOMATSU SEIREN Co., Ltd., Mikawa Factory) by an activated sludge method through aggregation and dehydration processes, was used as the organic sludge in the Examples described below. The organic matter content (with respect to the solid content) of the activated sludge was 83% by mass.

<Clays>

Gairome clay (from Gifu-ken or Aichi-ken) was used as the clays.

<Diatomaceous Earth>

Powdered diatomaceous earth with a moisture content of 5% by mass that is a raw material of an insulating firebrick from Noto Distriction was used as the diatomaceous earth.

<Slag>

Casting iron slag was used as slag. This casting iron slag is ductile casting iron slug in which the main components are SiO$_2$ Al$_2$O$_3$, CaO, Fe$_2$O$_3$, FeO, MgO, MnO, K$_2$O, and Na$_2$O.

(Example 1)

According to the composition of the mixture shown in Table 1, organic sludge and diatomaceous earth were mixed using Mix Muller (manufactured by Toshin Industry Co., Ltd.), thereby obtaining a primary mixture (first mixing operation). Then, clays and slag were added to the primary mixture, followed by further mixing and thus a mixture in a plastic state was obtained (second mixing operation). The obtained mixture was molded using a vacuum earth kneading and molding machine (manufactured by Takahama Industry Co., Ltd.) and thus a strip-shaped primary molding body with a width of 60 cm and a thickness of 2 cm was obtained. The primary molding body was cut into an arbitrary pitch and width, thereby obtaining a substantially square plate-like molding body with a thickness of 2 cm (molding step). The obtained molding body was dried using a hot air drying machine (180°C, 0.5 hours) and the moisture content thereof was set to be 1% by mass or less. Thereafter, using a continuous sintering furnace, the molding body was calcined under the calcination condition shown in Table 1. After the calcination, the side ends of the plate-like ceramic body were cut off along four side surfaces thereof, thereby obtaining a plate-like ceramic body having a width of 50 cm, a length of 50 cm, and a thickness of 4 cm (A size), a plate-like ceramic body having a width of 25 cm, a length of 25 cm, and a thickness of 4 cm (B size), and a plate-like ceramic body having a width of 16.7 cm, a length of 16.7 cm, and a thickness of 4 cm (C size) (calcination step). The both square plate-like surfaces of the obtained plate-like ceramic bodies have no structural difference and any surfaces can be used as a front surface or a back surface. The surface of the obtained plate-like ceramic body to be ground using a grinder was set to be a front surface and the surface thereof not to be ground was set to be a back surface. With respect to only the front surface of the obtained plate-like ceramic body, approximately 1 mm of the surface was ground away using a grinder and the back surface thereof was used without grinding.
For the dense layer and the first non-dense layer of the obtained plate-like ceramic body, the pore volume, the volume of pores per unit volume, the micropore volume, the micropore ratio, the bulk specific gravity and the porosity of the respective layers were obtained and the bending strength, the saturated moisture content, the moisture content of a sample pole having each pF value, and the thermal conductivity of the plate-like ceramic body were measured.
Moreover, the cross section of the obtained plate-like ceramic body was the same as shown in Fig. 1.
As a continuous sintering furnace, a roller hearth kiln (effective length of sintering furnace: total length of 15 m, dividing the sintering furnace into zones 1 to 10 with a length of respectively 1.5 m) was used.

(Comparative Example 1)

According to the composition of the mixture shown in Table 1, diatomaceous earth, clays, and slag were mixed using Mix Muller, thereby obtaining a mixture (mixing step). A molding body was obtained from the obtained mixture in a similar way to Example 1 and the molding body was calcined, thereby obtaining plate-like ceramic bodies of A to C sizes. In a similar way to Example 1, with respect to only the front surfaces of the obtained plate-like ceramic bodies, 1 mm of the surfaces were approximately ground away using a grinder and the back surfaces thereof were used without grinding.
For the obtained plate-like ceramic bodies, the pore volume, the volume of pores per unit volume, the micropore volume, the micropore ratio, the bulk specific gravity, and the porosity thereof were obtained in a similar way to Example 1 and the results are shown in Table 1. Moreover, the cross-sectional photograph of the obtained plate-like ceramic body is shown in FIG. 3.

(Measurement Method)

<Bulk Specific Gravity>

External dimensions of a test piece of each layer were measured using a caliper and thus the volume thereof was obtained. The same test piece was in an absolute dry state. Then, the mass thereof was measured using an electric balance (absolute dry state mass) and the specific gravity thereof was calculated by the following formula (4). The number (N) of samples in each Example was set to be N = 10.
$$\text{Specific gravity (g/cm}^3) = [\text{absolute dry state mass (g)}]/[\text{volume (cm}^3)] \quad ...(4)$$

<Porosity>

The porosity was measured based on JIS R2614-1985 by the following formula (5). A true specific gravity is a specific gravity which is measured in a state where the test piece is pulverized so as to remove air holes.
$$\text{Porosity (\% by volume)} = (\text{true specific gravity} - \text{bulk specific gravity}) \div \text{true}$$

$$\text{specific gravity} \times 100 \dots(5)$$

<Pore Volume, Micropore Volume, Micropore Ratio, and Median Pore Diameter>

The plate-like ceramic body (A size) of each Example was cut in a thickness direction and the respective layers of the dense layer, the first non-dense layer, and the second non-dense layer were cut into a size with a width of 15 mm, a length of 40 mm, and a thickness of 7 mm, thereby preparing test pieces. For the test pieces, the volume and the median pore diameter of pores were measured based on JIS R1655 under the following measurement conditions. The pore volume, the micropore volume, and the micropore ratio were calculated from the chart of the measurement result.

<<Measurement Condition>>

Apparatus to be used: AutoPore 9420 (manufactured by Micromeritics Instrument Corporation)
Mercury to be used: recycled mercury
Surface tension of mercury: 485 dynes/cm (0.485 N/m)
Contact angle of mercury: 130°
Measurement pressure: 0.5 to 60,000 psia (0.003 to 414 MPa)

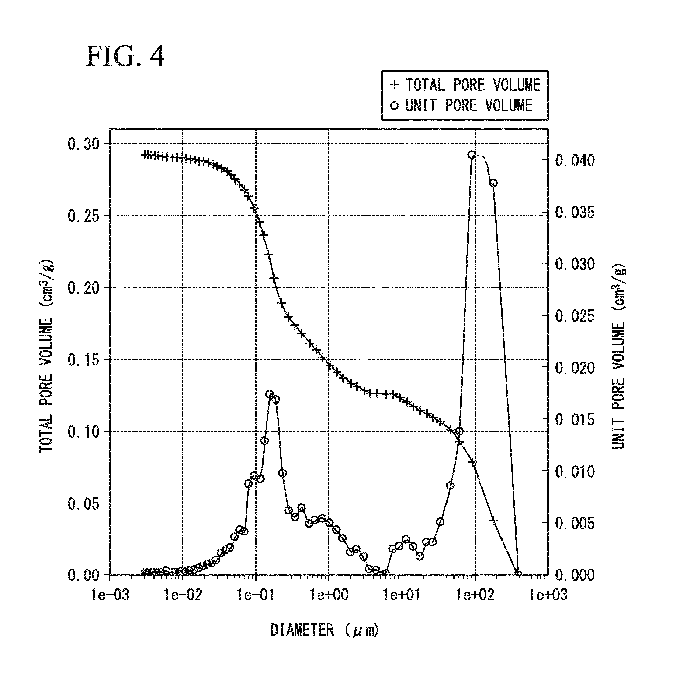

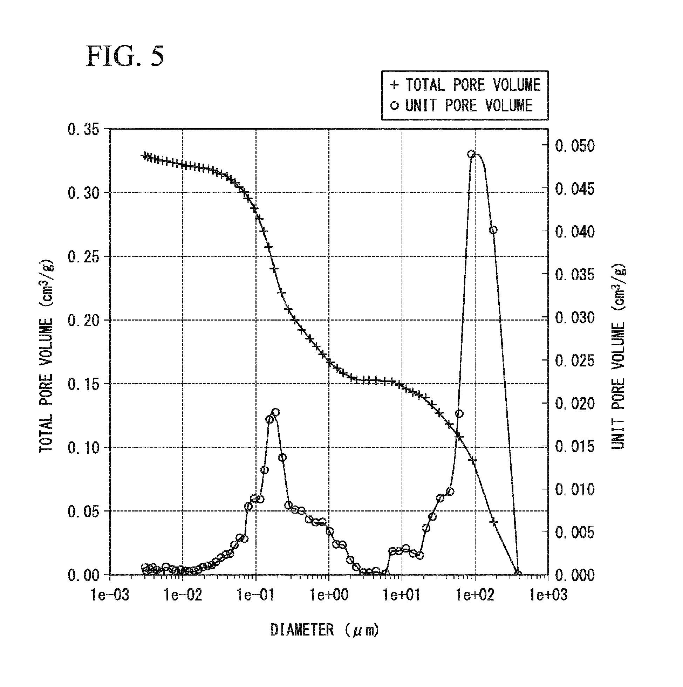

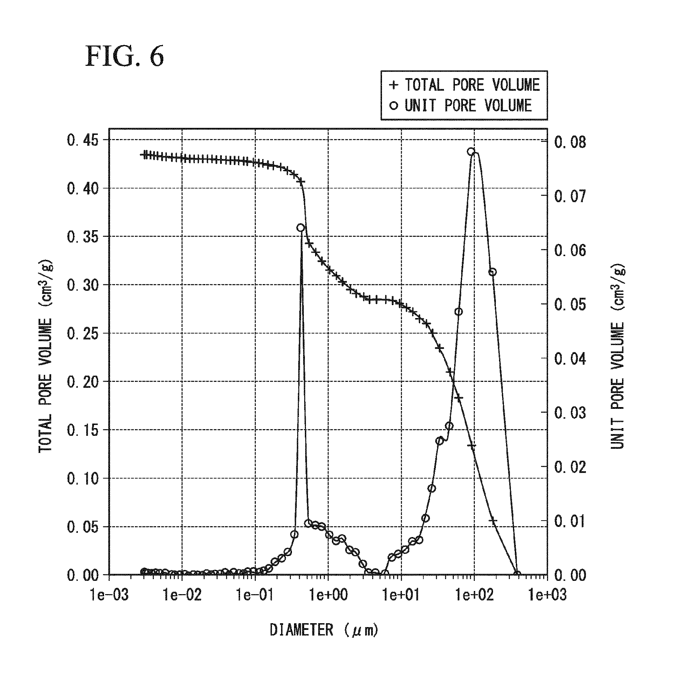

A method of calculating will be described using FIG. 4. FIG. 4 is a chart showing a measurement result of the pore volume of a dense layer of Example 1. The horizontal axis represents the diameter of pores, the right side of vertical axis represents volume of pores (unit pore volume) with a diameter in the horizontal axis, and the left side of the vertical axis represents a total volume of pores (total pore volume). As shown in FIG. 4, the total volume of pores with a diameter of 3 nm to 360 $\mu$m, that is, the pore volume was 0.29 cm$^3$/g. The total volume of pores with a diameter of 1 to 360 $\mu$m was 0.14 cm$^3$/g and the total volume of pores with a diameter of 0.01 to 360 $\mu$m was 0.28 cm$^3$/g.
The above-described results were substituted into the following formula (6) and thus the micropore volume was obtained. The micropore ratio was obtained from the obtained micropore volume and the pore volume.
The measurement result of the first non-dense layer is shown in FIG. 5 and the measurement result of Comparative Example 1 is shown in FIG. 6.
$$\text{Micropore volume} = [\text{total volume of pores with a diameter of 0.01 to 360 } \mu\text{m}] -$$

$$[\text{total volume of pores with a diameter of 1 to 360 } \mu\text{m}] \dots(6)$$

< Volume of Pores per Unit Volume >

The volume of pores per unit volume was obtained by the following formula (7).
$$\text{Volume of pores per unit volume (cm}^3/\text{cm}^3) = \text{pore volume} \div (1 \div \text{bulk specific}$$

$$\text{gravity)} \dots(7)$$

<Bending Strength>

The bending strength was measured based on JIS R5201.

<Saturated Moisture Content>

Samples (N = 10) in which the specific gravities were measured were immersed in water for 60 minutes. Thereafter, with the front surfaces thereof facing up, the samples were taken out of water without being tilted and the mass thereof (saturated state mass) was measured, thereby obtaining the saturated moisture content using the following formula (8). By taking the samples out of water without tilting them and with the front surfaces thereof facing up, it is possible to prevent water from flowing out of the samples.
$$\text{Saturated moisture content (\% by mass)} = [(\text{saturated state mass - absolute dry}$$

$$\text{state mass})/\text{absolute dry state mass} \times 100 \ ...(8)$$

<Measurement of Moisture Content of Sample Pole having each pF Value>

For the plate-like ceramic body (A size) in each Example, the central portion and portions in the vicinity of the four corners were cut out a substantially cylindrical shape having a diameter of 42 mm, and a thickness of 40 mm, and the cut portions in a saturated moisture-containing state were used as sample poles (five poles). Then, the sample poles were mounted on a dedicated rotor jig. The rotor jig on which the sample poles were mounted was mounted on a rotor (15B-R8 for pF measurement for soil) mounted on a centrifugal separator (Model: 50B-5, manufactured by SAKUMA CO., LTD.) and the centrifugal treatment was carried out at 650 rpm for 30 minutes. At this time, the quantity of water separated from the sample poles was considered to be the moisture content of the sample pole having pF value of 1.5 or less.
Next, the sample poles were subjected to the centrifugal treatment at 1,540 rpm for 30 minutes. Then, the quantity of water separated from the sample poles was considered to be the moisture content of the sample pole having pF value of more than 1.5 and 2.7 or less and the quantity of water remaining in the sample poles was considered to be the moisture content of the sample pole having pF value of more than 2.7.
The average mass of the five sample poles during drying was 46.4 g, the average mass of the five sample poles (saturated moisture-containing state) was 73.8 g, the average value of moisture content of the sample pole having pF value of 1.5 or less in the five sample poles was 16.5 g, the average moisture content of the sample pole having pF value of more than 1.5 and 2.7 or less in the five sample poles was 3.4 g, and the average moisture content of the sample pole having pF value of more than 2.7 in the five sample poles was 7.5 g.

<Measurement of Thermal Conductivity>

A specimen was sliced in a length direction, a width direction, and a thickness direction based on JIS A1412-2-1999 to have a length of 20 cm, a width of 20 cm, and a thickness of 21.6 mm and then a measurement was performed. The results were a heat current density of 45.7 W/m², a temperature of a high temperature side of 26.1 °C, a temperature of a low temperature side of 16.8°C, an average temperature of the specimen of 21.5°C, a thermal resistance of 17.5 (m²·K)/W and a thermal conductivity of 0.123 W/(m·K).
[Table 1]

| | | Example 1 | Comparative Example 1 |
|---|---|---|---|
| Mixture Composition | Organic Sludge (part by mass) | 10 | - |
| | Diatomaceous Earth (part by mass) | 5 | 5 |
| | Clays (part by mass) | 30 | 35 |
| | Slag (part by mass) | 55 | 60 |

(continued)

| | | | Example 1 | Comparative Example 1 |
|---|---|---|---|---|
| Calcination Condition | Calcination Temperature [Reaching Temperature] (°C) | | 1050 | 1050 |
| | Calcination Time (min) | | 65 | 65 |
| | Temperature Gradient | Zone 1 (°C/sec.) | 0.57 | 0.57 |
| | | Zone 2 (°C/sec.) | 0.16 | 0.16 |
| | | Zone 3 (°C/sec.) | 0.33 | 0.33 |
| | | Zone 4 (°C/sec.) | 0.52 | 0.52 |
| | | Zone 5 (°C/sec.) | 0.86 | 0.86 |
| | | Zone 6 (°C/sec.) | 0.005 | 0.005 |
| | | Zone 7 (°C/sec.) | -0.34 | -0.34 |
| | | Zone 8 (°C/sec.) | -0.72 | -0.72 |
| | | Zone 9 (°C/sec.) | -0.35 | -0.35 |
| | | Zone 10 (°C/sec.) | -0.26 | -0.26 |
| Structure | Dense Layer | Pore Volume ($cm^3$/g) | 0.29 | 0.43 |
| | | Volume of Pores per Unit Volume ($cm^3$/$cm^3$) | 0.26 | 0.21 |
| | | Micropore Volume ($cm^3$/g) | 0.14 | 0.11 |
| | | Micropore Ratio (% by volume) | 48 | 26 |
| | | Bulk Specific Gravity (g/$cm^3$) | 0.89 | 0.48 |
| | | Porosity (% by volume) | 67.8 | 82.5 |
| | | Median Pore Diameter ($\mu$m) | 1.00 | 40.1 |
| | First Non-dense Layer | Pore Volume ($cm^3$/g) | 0.33 | - |
| | | Volume of Pores per Unit Volume (cm /$cm^3$) | 0.20 | - |
| | | Micropore Volume ($cm^3$/g) | 0.15 | - |
| | | Micropore Ratio (% by volume) | 47 | - |
| | | Bulk Specific Gravity (g/$cm^3$) | 0.62 | - |
| | | Porosity (% by volume) | 77.5 | - |
| | | Median Pore Diameter ($\mu$m) | 1.10 | - |

(continued)

| | | | Example 1 | Comparative Example 1 |
|---|---|---|---|---|
| Result | Bending Strength (N/mm$^2$) | | 3.3 | - |
| | Saturated Moisture Content (% by mass) | | 59 | - |
| | Moisture Content of Sample Pole having each pF Value | 1.5 or less (% by mass) | 60.2 | - |
| | | greater than 1.5 and 2.7 or less (% by mass) | 12.4 | - |
| | | greater than 2.7 (% by mass) | 27.4 | - |
| | Thermal Conductivity (W/(m.K)) | | 0.123 | - |

As shown in Table 1 and FIG. 1, the plate-like ceramic body of Example 1 has a three-layer structure configured to include the dense layer, and the non-dense layers provided on both sides of the dense layer. The pore volume thereof was 0.2 cm$^3$/g or larger and the micropore ratio thereof was 30% by volume or more.

On the other hand, as shown in FIG. 3, the plate-like ceramic body of Comparative Example 1 has a single-layer structure and voids, particularly, massive voids having a size measured by millimeters, were shown in the entire cross section of the plate-like ceramic body thereof. Moreover, the micropore ratio of the plate-like ceramic body of Comparative Example 1 was 26% by volume.

As shown in Table 1, Example 1 to which the present invention is applied had a bending strength of 3.3 N/mm$^2$ or greater and thus the bending strength thereof was a sufficient strength for use as a greening base material. Moreover, the moisture content of a sample pole having pF value of 2.7 or less was 72.6% by mass. Generally, water of a sample pole having a pF value of 2.7 or less may be used for the plant growth. According to this, it was found that water retained in the plate-like ceramic body of Example 1 was retained in a state where the plate-like ceramic body can be used as a greening base material.

(Experimental Example 1) Diffusivity (in Horizontal Direction)

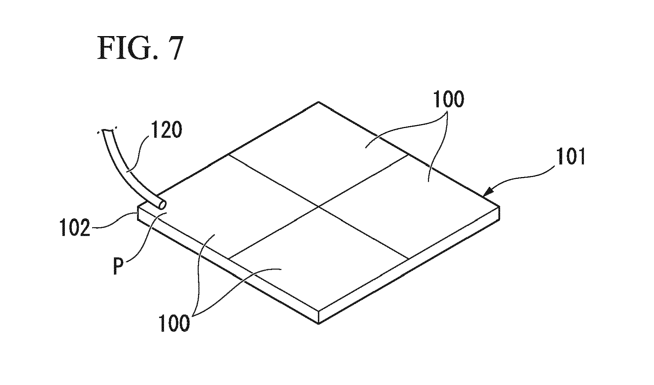

As shown in FIG. 7, four pieces of plate-like ceramic bodies (B size) 100 of Example 1 were arranged to be a test bed 101. 4,000 cm$^3$ of water was poured by a tube 120 to a position P in the vicinity of a top portion 102 of the test bed 101 (supply rate: 50 cm$^3$/min., for 80 minutes). The water was poured to the front surface of the plate-like ceramic body. During the start of pouring water to the end of pouring water, water leakage from the test bed 101 was not found. Moreover, the water to be poured infiltrated the entire test bed 101.

From the above-described result, it was found that the plate-like ceramic body to which the present invention is applied has an excellent diffusivity in a horizontal direction.

(Experimental Example 2) Diffusivity (15° inclination)

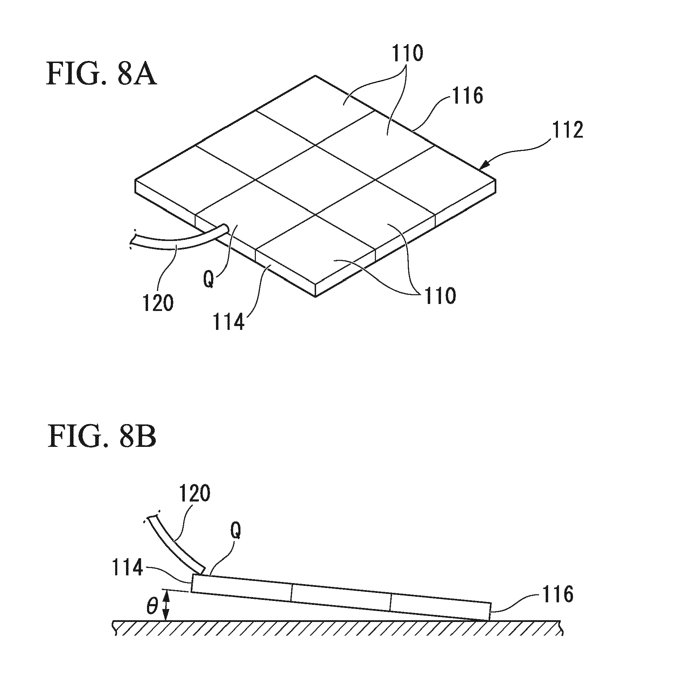

As shown in FIG. 8A, nine pieces of plate-like ceramic bodies (C size) 110 of Example 1 were arranged to be a test bed 112. As shown in FIG. 8B, the test bed 112 was disposed at an inclination angle θ = 15° to a horizontal surface such that the test bed 112 was directed from a first side 114 downward a second side 116 facing the first side 114. 4,000 cm$^3$ of water was poured by the tube 120 to a position Q in the vicinity of the first side 114 (supply rate: 50 cm$^3$/min., for 80 minutes). The water was poured to the front surface of the plate-like ceramic body. During the start of pouring water to the end of pouring water, water leakage from the test bed 112 was not found. Moreover, the water to be poured infiltrated the entire test bed 112.

From the above-described result, it was found that the plate-like ceramic body to which the present invention is applied has excellent diffusivity in a horizontal direction even in a case where the plate-like ceramic body was inclined by 15°.

(Experimental Example 3) Plant Growth Test

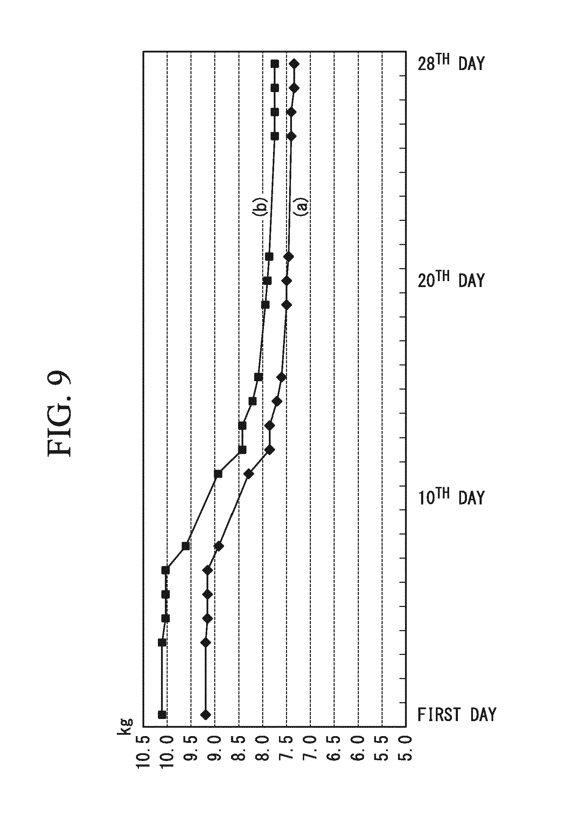

The plate-like ceramic body (A size, dry mass: 6.9 kg) of Example 1 was set to be in a saturated moisture-containing state. Then, artificial soil for greening was laid on the front surface of the plate-like ceramic body to have a thickness of 1 cm and sedums were planted so as to make a greening base (kg). The two greening bases (greening bases A and B) were prepared so as to be stored without irrigation with water and then the growth situation of the sedum was observed and the masses of the greening bases were measured at 10 a.m. every day. The result of the mass measurement is shown in FIG. 9.

The artificial soil for greening used in this experiment was a mixture of coconut shell mature compost: 50% by mass, vermiculite: 20% by mass, Kanuma earth (fine grain): 20% by mass, peat moss: 10% by mass, Unimix Plus II: 750 g/m$^3$ and MAGAMP III BB-SS: 1 kg/m$^3$.

FIG. 9 is a graph in which storage days is represented in a horizontal axis and the mass of the greening base is represented in a vertical axis. In the graph, an explanatory note (a) indicates the greening base A and an explanatory note (b) indicates the greening base B. As shown in FIG. 9, the mass of the greening base A was 9.2 kg and the mass of the greening base B was 10.1 kg at the first day of storage beginning. After stored without irrigation with water for 28 days, the mass of the greening base A was 7.35 kg and the mass of the greening base B was 7.75 kg. Moreover, the planted sedums were not fired even after a lapse of 28 days. From the above-described results, it was assumed that a slight amount of moisture remained in the plate-like ceramic body in a case of the storage without irrigation with water for 28 days.

(Experimental Example 4) Measurement of Evaporation Rate

Hereinafter, in Experimental Examples 4-1 and 4-2, the front surface and the back surface of the plate-like ceramic body obtained in Example 1 were used without grinding.

<Experimental Example 4-1>

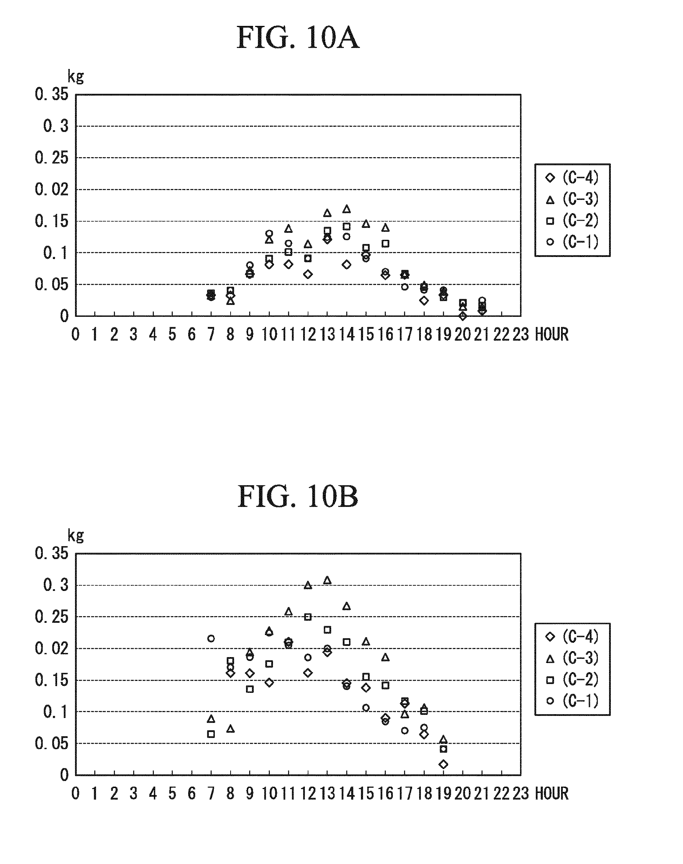

The front surface of the plate-like ceramic body (A size, dry mass: 9.6 kg) was irrigated with 2.64 kg of water and then was set to be a sample. This sample was disposed outside and then the mass transition of the sample was measured over 2 days. The irrigation was carried out at 5 a.m. and the mass of the sample was measured every 1 hour to obtain an amount of reduction in the mass of the sample every 1 hour. FIG. 10A shows the transition of amount of reduction in the mass of the sample at the first day. In addition, after the sample was irrigated with 2.64 kg of water at 5 a.m. of the second day, the mass of the sample was measured every 1 hour to obtain an amount of reduction in the mass of the sample every 1 hour. FIG. 10B shows the transition of amount of reduction in the mass of the sample at the second day.

<Experimental Example 4-2>

An amount of reduction in the mass of the sample was obtained in a similar way to Experimental Example 4-1, except that the plate-like ceramic body was changed to a plate-like ceramic single body and artificial soil for greening was laid on the front surface of the plate-like ceramic body (A size) to have a thickness of 1 cm and sedums were planted, thereby preparing a sample. The results are shown in FIGS. 10A and 10B.

<Experimental Example 4-3>

An amount of reduction in the mass of the sample was obtained in a similar way to Experimental Example 4-1, except that, without using the plate-like ceramic body, artificial soil for greening was laid to have a thickness of 80 mm. The results are shown in FIGS. 10A and 10B.

<Experimental Example 4-4>

An amount of reduction in the mass of the sample was obtained in a similar way to Experimental Example 4-1, except that, without using the plate-like ceramic body, artificial soil for greening was laid to have a thickness of 80 mm and Korean lawn grass was planted thereon. The results are shown in FIGS. 10A and 10B.

FIG. 10A is a graph showing the transition of amount of reduction in the mass of the sample at the first day. The measurement time is represented in a horizontal axis and the amount of reduction in the mass of the sample is represented in a vertical axis. FIG. 10B is a graph showing the transition of amount of reduction in the mass of the sample at the second day. The measurement time is represented in a horizontal axis and the amount of reduction in the mass of the sample is represented in a vertical axis. In FIGS. 10A and 10B, an explanatory note (c-1) represents the result of Experimental Example 4-1, an explanatory note (c-2) represents the result of Experimental Example 4-2, an explanatory note (c-3) represents the result of Experimental Example 4-3, and an explanatory note (c-4) represents the result of Experimental Example 4-4.

As shown in FIGS. 10A and 10B, Experimental Example 4-1 using only the plate-like ceramic body and Experimental Example 4-2 in which sedums were planted on the plate-like ceramic body had a larger evaporation amount of water per unit time than Experimental Example 4-4 in which Korean lawn grass was planted. Moreover, Experimental Examples 4-1 and 4-2 had a smaller evaporation amount of water per unit time than Experimental Example 4-3 using artificial soil for greening.

From the above-described results, it may be assumed that the evaporation of water of Experimental Examples 4-1 and 4-2 is maintained longer than that of Experimental Example 4-3 and Experimental Examples 4-1 and 4-2 have a high cooling effect by the evaporation of water compared to Experimental Example 4-4.

Industrial Applicability

Since the present invention provides a porous ceramic sintered body suitable for plant growth and with a high cooling effect, the present invention is extremely useful to industrial applicability.

| | Reference Signs List |
|---|---|
| 1, 100, 110 | PLATE-LIKE CERAMIC BODY |
| 10 | DENSE LAYER |
| 14 | PORE |
| 20 | FIRST NON-DENSE LAYER |
| 30 | SECOND NON-DENSE LAYER |

**Claims**

1.  A porous ceramic sintered body comprising a pore volume, which is the total volume of pores with a diameter of 3 nm to 360 $\mu$m, of 0.2 cm$^3$/g or larger and comprising a micropore volume ratio of 30% by volume or more, in which the micropore volume ratio equals to the total volume of pores with a diameter equal to or greater than 0.01 $\mu$m and less than 1 $\mu$m divided by the pore volume.

2.  The porous ceramic sintered body according to Claim 1, wherein a median pore diameter of pores with a diameter of 3 nm to 360 $\mu$m is smaller than 40 $\mu$m.

3.  The porous ceramic sintered body according to Claim 1 or 2, comprising a layer-like dense layer having a bulk specific gravity of 0.7 g/cm$^3$ or more.

4.  The porous ceramic sintered body according to any one of Claims 1 to 3, further comprising a non-dense layer having a bulk specific gravity of less than 0.7 g/cm$^3$.

5.  The porous ceramic sintered body according to Claim 4, wherein the non-dense layer is provided on both surfaces of the dense layer.

6.  The porous ceramic sintered body according to any one of Claims 1 to 5, used as a greening base material.

FIG. 1

EP 2 617 696 A1

# FIG. 2

(a)

(b)

# FIG. 3

FIG. 4

## FIG. 5

FIG. 6

FIG. 7

## FIG. 8A

## FIG. 8B

# FIG. 9

# FIG. 10A

# FIG. 10B

| **INTERNATIONAL SEARCH REPORT** | International application No. |
|---|---|
| | PCT/JP2011/071034 |

**A. CLASSIFICATION OF SUBJECT MATTER**
C04B38/00(2006.01)i, A01G1/00(2006.01)i, A01G7/00(2006.01)i, A01G9/10
(2006.01)i, C04B33/13(2006.01)i, C04B33/132(2006.01)i

According to International Patent Classification (IPC) or to both national classification and IPC

**B. FIELDS SEARCHED**

Minimum documentation searched (classification system followed by classification symbols)
C04B38/00-38/10, C04B33/00-33/36

Documentation searched other than minimum documentation to the extent that such documents are included in the fields searched
Jitsuyo Shinan Koho          1922-1996    Jitsuyo Shinan Toroku Koho    1996-2011
Kokai Jitsuyo Shinan Koho    1971-2011    Toroku Jitsuyo Shinan Koho    1994-2011

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 6-32673 A  (Kurosaki Corp.),<br>08 February 1994 (08.02.1994),<br>claim 1; fig. 1, 2<br>(Family: none) | 1-3<br>4-6 |
| X<br>A | JP 11-240777 A  (Sumitomo Chemical Co., Ltd.),<br>07 September 1999 (07.09.1999),<br>paragraph [0023]; fig. 1<br>(Family: none) | 1-3<br>4-6 |
| A | JP 2008-296141 A  (NGK Insulators, Ltd.),<br>11 December 2008 (11.12.2008),<br>claim 1; fig. 3<br>& US 2008/0295469 A1    & EP 2042224 A2 | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 30 September, 2011 (30.09.11) | 11 October, 2011 (11.10.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/071034

| C (Continuation). DOCUMENTS CONSIDERED TO BE RELEVANT | | |
|---|---|---|
| Category* | Citation of document, with indication, where appropriate, of the relevant passages | Relevant to claim No. |
| P,A | JP 2011-1204 A (JFE Steel Corp.), 06 January 2011 (06.01.2011), claim 1; table 1; fig. 1 (Family: none) | 1-6 |
| P,A | WO 2010/106724 A1 (Komatsu Seiren Co., Ltd.), 23 September 2010 (23.09.2010), paragraph [0069]; table 1 (Family: none) | 1-6 |

Form PCT/ISA/210 (continuation of second sheet) (July 2009)

**EP 2 617 696 A1**

## REFERENCES CITED IN THE DESCRIPTION

### Patent documents cited in the description

- JP 2010208458 A
- JP 2005239467 A